# EUROPEAN PATENT APPLICATION

(11) **EP 4 550 860 A2**
(43) Date of publication of application: **07.05.2025**
(21) Application number: 24193838.0
(22) Date of filing: 09.08.2024
(51) Int. Cl.: H04W 8/18, H04W 48/18

(54) **SYSTEM AND METHOD FOR OPTIMIZING SELECTION OF STANDALONE NON-PUBLIC NETWORK BY USER EQUIPMENT**

(30) Priority: 12.08.2023 IN 202341054251
(71) Applicant: Samsung Electronics Co., Ltd, Suwon-si, Gyeonggi-do 16677 (KR)
(72) Inventor: COMARAVELOU, Sivasankar, 560048 Bengaluru (IN); GANIG, Chetan Ramesh, 560048 Bengaluru (IN); DANDRA, Prasad Basavaraj, 560048 Bengaluru (IN); TENSINGH, Shrinithi Andal, 560048 Bengaluru (IN); HASHMI, Danish Ehsan, 560048 Bengaluru (IN); KUMAR, Lalith, 560048 Bengaluru (IN); SINHA, Utsav, 560048 Bengaluru (IN)
(74) Representative: Marks & Clerk LLP

(57) **Abstract**

A method for optimizing selection of a Standalone Non-Public Network (SNPN) by a User Equipment (UE), includes: receiving, from a Public Land Mobile Network (PLMN) or a SNPN, SNPN selection parameters associated with a PLMN subscription list corresponding to one or more Universal Subscriber Identity Modules (USIMs), wherein the SNPN selection parameters comprises a list of SNPNs, and a plurality of configuration parameters supported by the PLMN for the one or more USIMs; and selecting at least one SNPN from the list of SNPNs based on the PLMN subscription list and storing SNPN selection parameters along with a USIM being associated with the SNPN selection parameters.

## Description

### BACKGROUND

### 1. Field

The disclosure are directed to the field of Standalone Non-public Networks (SNPNs), and more specifically, relate to systems and methods for optimizing selection of SNPN by a User Equipment (UE).

### 2. Description of Related Art

Non-public networks (NPNs) are designed for non-public use and intended for exclusive deployment by enterprises and other private entities. These networks can be configured in various ways, including as standalone networks, hosted by Public Land Mobile Networks (PLMNs), or offered as a network slice of a PLMN. The NPNs may be deployed as SNPNs, which operate independently of PLMN network functions, or as Public Network Integrated NPNs, supported by the PLMN. Devices that SNPNs are equipped with a "list of subscriber data" containing subscriber identifiers (Subscription Permanent Identifiers, or SUPIs), authentication credentials, SNPN identities, and optionally, access identities and preconfigured rules. The foregoing information allows users to register without a strong dependency on Universal Subscriber Identity Modules (USIMs).

According to technical specifications such as the 3rd Generation Partnership Project (3GPP) Technical Specification (TS) 23.122, the UE is configured with a "list of subscriber data" that can include either a network-specific identifier or an International Mobile Subscriber Identity (IMSI), depending on the authentication procedure used. The subscriber data list facilitates the selection of the SNPNs and may include credentials for accessing the SNPNs via a credentials holder. If the UE is equipped with a USIM that has PLMN subscription, the UE can be configured with the SNPN selection parameters. The parameters include user-controlled and credentials holder-controlled prioritized lists of preferred SNPNs and Group ID for Network Selection (GINs). The subscriber data list may also contain time validity and location assistance information for localized services.

Additionally, as outlined in 3GPP TS 24.501, specific protocols govern the handling of the UE when the UE is deemed illegal or encounter certain conditions. For instance, the UE must delete or invalidate certain network data under specified circumstances, and if the UE does not support credentials from a credentials holder, the UE treats certain SNPN entries as invalid until the device is updated or restarted, current specifications and literature fall short in providing solutions for managing the SNPN selection parameters, particularly in scenarios involving the storage, deletion, and invalidation of these parameters upon receiving selection data associated with PLMN subscriptions for various USIMs.

However, existing SNPN technologies do not adequately address the handling of permanent reject causes and the complexities arising from subscriber data lists containing multiple entries with identical subscriber identifiers.

### SUMMARY

This summary is provided to introduce a selection of aspects, in a simplified format, that are further described in the detailed description of the disclosure. This summary is neither intended to identify key or essential aspects of the disclosure nor is it intended for determining the scope of the disclosure.

According to an aspect of the disclosure, a method for optimizing selection of a Standalone Non-Public Network (SNPN) by a User Equipment (UE), includes: receiving, from a Public Land Mobile Network (PLMN) or a SNPN, SNPN selection parameters associated with a PLMN subscription list corresponding to one or more Universal Subscriber Identity Modules (USIMs), wherein the SNPN selection parameters includes a list of SNPNs, and a plurality of configuration parameters supported by the PLMN for the one or more USIMs; and selecting at least one SNPN from the list of SNPNs based on the PLMN subscription list and storing SNPN selection parameters along with a USIM being associated with the SNPN selection parameters.

According to an aspect of the disclosure, a method for optimizing selection of a Standalone Non-Public Network (SNPN) by a User Equipment (UE), includes selecting at least one SNPN from a list of SNPNs, based on a PLMN subscription list and associated plurality of SNPN selection parameters, wherein the plurality of SNPN selection parameters associated with the PLMN subscription list corresponding to one or more Universal Subscriber Identity Modules (USIMs) are preconfigured at the UE, and wherein the plurality of SNPN selection parameters includes the list of SNPNs and a plurality of configuration parameters supported by the PLMN for the one or more USIMs.

According to an aspect of the disclosure, a method for optimizing selection of a Standalone Non-Public Network (SNPN) by a User Equipment (UE), includes selecting at least one SNPN from a list of subscriber data, wherein the list of subscriber data includes a plurality of entries corresponding to each of one or more SNPNs, wherein each entry includes at least one of a Subscription Permanent Identifier (SUPI), authentication credentials, an SNPN ID, and a validation status indicator, and wherein the list of subscriber data is preconfigured at the UE and a corresponding network entity.

According to an aspect of the disclosure, a system for optimizing selection of a Standalone Non-Public Network (SNPN) by a User Equipment (UE), includes: at least one memory; at least one processor operatively connected to the at least one memory and configured to: receive, from a Public Land Mobile Network (PLMN) or a SNPN, SNPN selection parameters associated with the PLMN subscription list corresponding to one or more Universal Subscriber Identity Modules (USIMs), wherein the SNPN selection parameters includes a list of SNPNs and a plurality of configuration parameters supported by the PLMN for the one or more USIMs; and select at least one SNPN from the list of SNPNs based on the PLMN subscription list and storing SNPN selection parameters along with a USIM being associated with the SNPN selection parameters.

According to an aspect of the disclosure, a system for optimizing selection of a Standalone Non-Public Network (SNPN) by a User Equipment (UE), includes: at least one memory; at least one processor operatively connected to the at least one memory and configured to select at least one SNPN from a list of SNPNs based on a PLMN subscription list and associated plurality of SNPN selection parameters, wherein the plurality of SNPN selection parameters associated with the PLMN subscription list corresponding to one or more Universal Subscriber Identity Modules (USIMs) are preconfigured at the UE, and wherein the plurality of SNPN selection parameters includes the list of SNPNs and a plurality of configuration parameters supported by the PLMN for the one or more USIMs.

According to an aspect of the disclosure, a system for optimizing selection of a Standalone Non-Public Network (SNPN) by a User Equipment (UE), includes: at least one memory; at least one processor operatively connected to the at least one memory and configured to select at least one SNPN from a list of subscriber data, wherein the list of subscriber data includes a plurality of entries corresponding to each of one or more SNPNs, wherein each entry includes at least one of a Subscription Permanent Identifier (SUPI), authentication credentials, an SNPN ID, and a validation status indicator, and wherein the list of subscriber data is preconfigured at the UE and a corresponding network entity.

At least some of the above and other features of the invention are set out in the claims.

To further clarify the advantages and features of the disclosure, a more particular description of the disclosure will be rendered by reference to specific embodiments thereof, which are illustrated in the appended drawings. These drawings depict only typical embodiments of the disclosure and are therefore not to be considered limiting of its scope. The disclosure will be described and explained with additional specificity and detail in the accompanying drawings.

### BRIEF DESCRIPTION OF THE DRAWINGS

The above and other aspects, features, and advantages of certain embodiments of the disclosure will be more apparent from the following description taken in conjunction with the accompanying drawings, in which:
FIG. 1 is an architecture illustrates accessing PLMN services via a SNPN using PLMN subscription, according to the related art;
FIGS. 2A and 2B illustrate a sequence of operations depicting a challenge in a registration procedure for a UE when dealing with different PLMNs and SNPNs, according to a conventional technique of the related art;
FIG. 3 illustrates a sequence of operations depicting a challenge in a registration procedure for the UE when dealing with different PLMNs and SNPNs, according to another conventional technique of the related art;
FIG. 4 illustrates a sequence of operations depicting a challenge in a registration procedure for the UE when dealing with different PLMNs and SNPNs, according to yet another conventional technique of the related art;
FIG. 5 illustrates a sequence of operations depicting a challenge in a registration procedure for the UE when dealing with different PLMNs and SNPNs, according to yet another conventional technique of the related art.
FIGS. 6A and 6B illustrate a sequence of operations depicting a successful registration procedure for the UE when dealing with different PLMNs and SNPNs, according to an embodiment of the disclosure;
FIGS. 7A and 7B illustrate a sequence of operations depicting a successful registration procedure for the UE when dealing with different PLMNs and SNPNs, according to another embodiment of the disclosure;
FIGS. 8A and 8B illustrate a sequence of operations depicting a successful registration procedure for the UE when dealing with different PLMNs and SNPNs, according to another embodiment of the disclosure;
FIGS. 9A and 9B illustrate a sequence of operations depicting a successful registration procedure for the UE when dealing with different PLMNs and SNPNs, according to another embodiment of the disclosure;
FIG. 10 illustrates a sequence of operations depicting a successful registration procedure for the UE when dealing with different PLMNs and SNPNs, according to another embodiment of the disclosure;
FIG. 11 illustrates a flow diagram of a method for optimizing selection of the SNPN by the UE, according to an embodiment of the disclosure;
FIG. 12 illustrates a flow diagram of a method for optimizing selection of the SNPN by the UE, according to another embodiment of the disclosure;
FIG. 13 illustrates a flow diagram of a method for optimizing selection of the SNPN by the UE, according to another embodiment of the disclosure; and
FIG. 14 illustrates an embodiment of a system, according to an embodiment of the disclosure.

Further, skilled artisans will appreciate that elements in the drawings are illustrated for simplicity and may not have necessarily been drawn to scale. For example, the flow charts illustrate the method in terms of the most prominent steps involved to help to improve understanding of aspects of the disclosure. Furthermore, in terms of the construction of the device, one or more components of the device may have been represented in the drawings by conventional symbols, and the drawings may show only those specific details that are pertinent to understanding the embodiments of the disclosure so as not to obscure the drawings with details that will be readily apparent to those of ordinary skill in the art having the benefit of the description herein.

### DETAILED DESCRIPTION

For the purpose of promoting an understanding of the principles of the disclosure, reference will now be made to the various embodiments and specific language will be used to describe the same. No limitation of the scope of the disclosure is thereby intended, such alterations and further modifications in the illustrated system, and such further applications of the principles of the disclosure as illustrated therein being contemplated as would normally occur to one skilled in the art to which the disclosure relates.

The terms as used in the disclosure are provided to merely describe specific embodiments, not intended to limit the scope of other embodiments. Singular forms include plural referents unless the context clearly dictates otherwise. The terms and words as used herein, including technical or scientific terms, may have the same meanings as generally understood by those skilled in the art. The terms as generally defined in dictionaries may be interpreted as having the same or similar meanings as or to contextual meanings of the relevant art. Unless otherwise defined, the terms should not be interpreted as ideally or excessively formal meanings. Even though a term is defined in the disclosure, the term should not be interpreted as excluding embodiments of the disclosure under circumstances.

Those skilled in the art will understand that the foregoing general description and the following detailed description are explanatory of the disclosure and are not intended to be restrictive thereof.

Whether or not a certain feature or element was limited to being used only once, it may still be referred to as "one or more features" or "one or more elements" or "at least one feature" or "at least one element." Furthermore, the use of the terms "one or more" or "at least one" feature or element do not preclude there being none of that feature or element, unless otherwise specified by limiting language including, but not limited to, "there needs to be one or more..." or "one or more elements is required."

Reference is made herein to some "embodiments." An embodiment is an example of a possible implementation of any features and/or elements of the disclosure. Some embodiments have been described for the purpose of explaining one or more of the potential ways in which the specific features and/or elements of the proposed disclosure fulfill the requirements of uniqueness, utility, and non-obviousness.

Use of the phrases and/or terms including, but not limited to, "a first embodiment," "a further embodiment," "an alternate embodiment," "one embodiment," "an embodiment," "multiple embodiments," "some embodiments," "other embodiments," "further embodiment", "furthermore embodiment", "additional embodiment" or other variants thereof do not necessarily refer to the same embodiments. Unless otherwise specified, one or more particular features and/or elements described in connection with one or more embodiments may be found in one embodiment, or may be found in more than one embodiment, or may be found in all embodiments, or may be found in no embodiments. Although one or more features and/or elements may be described herein in the context of only a single embodiment, or in the context of more than one embodiment, or in the context of all embodiments, the features and/or elements may instead be provided separately or in any appropriate combination or not at all. Conversely, any features and/or elements described in the context of separate embodiments may alternatively be realized as existing together in the context of a single embodiment.

Any particular and all details set forth herein are used in the context of some embodiments and therefore should not necessarily be taken as limiting factors to the proposed disclosure.

The terms "comprises", "comprising", or any other variations thereof, are intended to cover a non-exclusive inclusion, such that a process or method that comprises a list of steps does not include only those steps but may include other steps not expressly listed or inherent to such process or method. Similarly, one or more devices or sub-systems or elements or structures or components proceeded by "comprises... a" does not, without more constraints, preclude the existence of other devices or other sub-systems or other elements or other structures or other components or additional devices or additional sub-systems or additional elements or additional structures or additional components.

The term "couple" and the derivatives thereof refer to any direct or indirect communication between two or more elements, whether or not those elements are in physical contact with each other. The terms "transmit", "receive", and "communicate" as well as the derivatives thereof encompass both direct and indirect communication. The terms "include" and "comprise", and the derivatives thereof refer to inclusion without limitation. The term "or" is an inclusive term meaning "and/or". The phrase "associated with," as well as derivatives thereof, refer to include, be included within, interconnect with, contain, be contained within, connect to or with, couple to or with, be communicable with, cooperate with, interleave, juxtapose, be proximate to, be bound to or with, have, have a property of, have a relationship to or with, or the like. The term "controller" refers to any device, system, or part thereof that controls at least one operation. The functionality associated with any particular controller may be centralized or distributed, whether locally or remotely. The phrase "at least one of," when used with a list of items, means that different combinations of one or more of the listed items may be used, and only one item in the list may be needed. For example, "at least one of A, B, and C" includes any of the following combinations: A, B, C, A and B, A and C, B and C, and A and B and C, and any variations thereof. As an additional example, the expression "at least one of a, b, or c" may indicate only a, only b, only c, both a and b, both a and c, both b and c, all of a, b, and c, or variations thereof. Similarly, the term "set" means one or more. Accordingly, the set of items may be a single item or a collection of two or more items.

Moreover, multiple functions described below can be implemented or supported by one or more computer programs, each of which is formed from computer readable program code and embodied in a computer readable medium. The terms "application" and "program" refer to one or more computer programs, software components, sets of instructions, procedures, functions, objects, classes, instances, related data, or a portion thereof adapted for implementation in a suitable computer readable program code. The phrase "computer readable program code" includes any type of computer code, including source code, object code, and executable code. The phrase "computer readable medium" includes any type of medium capable of being accessed by a computer, such as Read Only Memory (ROM), Random Access Memory (RAM), a hard disk drive, a Compact Disc (CD), a Digital Video Disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable memory device.

Embodiments of the disclosure will be described below in detail with reference to the accompanying drawings.

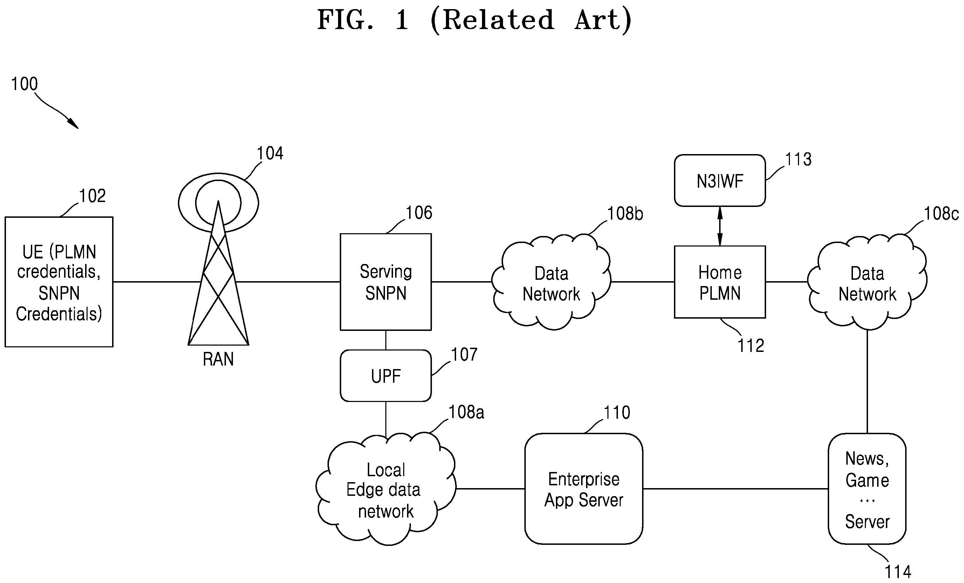

FIG. 1 is an architecture 100 that illustrates accessing PLMN services via SNPN using PLMN subscription, according to the related art.

The architecture 100 includes the User Equipment (UE) 102, a Radio Access Network (RAN) 104, a Serving Standalone Non-Public Network (SNPN) 106, and various data networks 108a, 108b, and 108c. The architecture 100 further includes Home Public Land Mobile Network (HPLMN) 112 and Non-3GPP Interworking Function (N3IWF) 113 associated with the HPLMN 112, connecting to external data networks and servers such as the News, Game, etc., server 110, and server 114 respectively.

In an embodiment, the UE 102, equipped with PLMN and SNPN credentials, connects to the RAN 104, which in turn interfaces with the Serving SNPN 106. The RAN 104 may be configured to provide wireless connectivity to the UE 102. The RAN 104 includes base stations and other infrastructure that facilitate communication between the UE 102 and the core network. The RAN 104 may be configured to handle tasks such as signal processing, radio resource management, and mobility management, ensuring efficient and reliable communication. Further, the serving SNPN 106 comprises User Plane Functions (UPF) 107 and other 5G Network Functions (NFs). The architecture 100 allows the UE 102 to access various local and remote data networks, such as the local edge data network 108a and broader data networks 108b.

The UPF 107 plays a crucial role in managing and routing user data traffic between the UE 102 and various data networks. The UPF 107 may be configured to handle the data forwarding and packet routing functions, ensuring that data packets are transmitted efficiently and accurately across the network. The UPF 107 acts as a gateway, interfacing with both the RAN 104 and external data networks, such as local Edge data networks and broader internet services. The UPF 107 is responsible for Quality of Service (QoS) enforcement, traffic management, and policy application, which are essential for maintaining service quality and performance.

In another embodiment of the architecture, the N3IWF 113 within the HPLMN 112 facilitates the connection to non-3GPP networks, acting as a bridge for secure communication between the 5G core network and external networks. The HPLMN 112 ensures that the UE 102 can access services provided by remote servers, including those for news and gaming, via an overlay network.

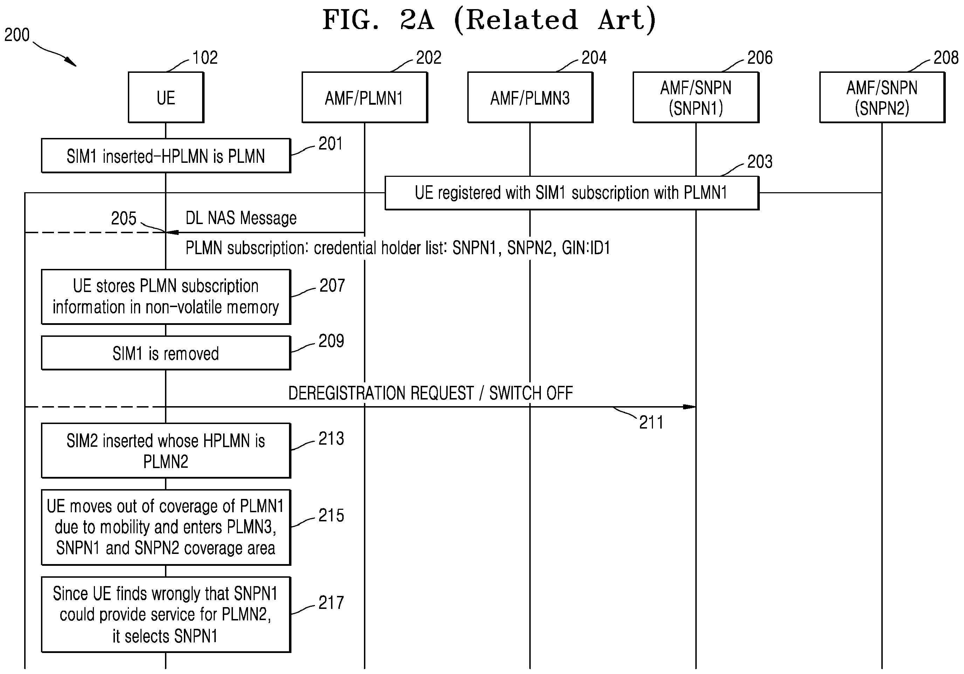

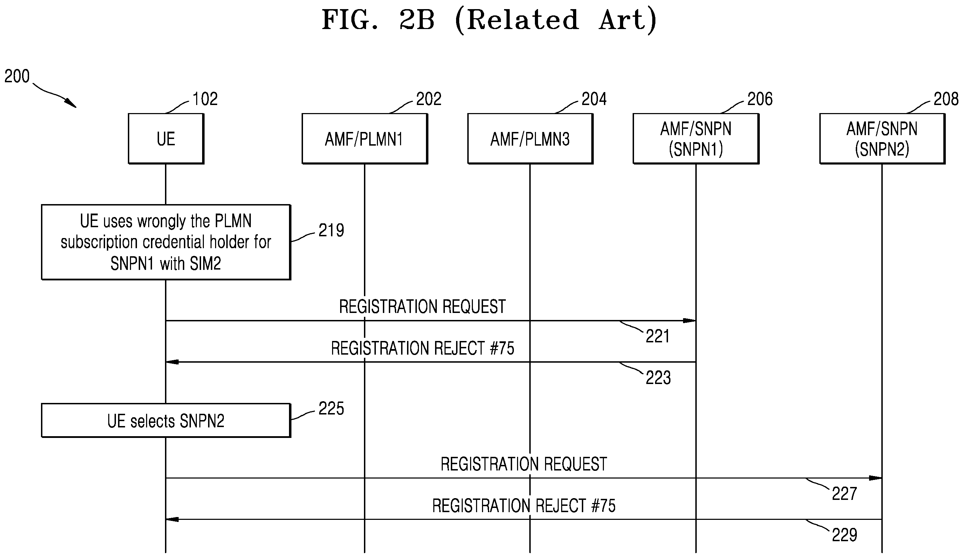

FIGS. 2A and 2B illustrate a sequence of operations 200 depicting a challenge in a registration procedure for the UE 102 when dealing with different PLMNs and SNPNs, according to a conventional technique of the related art.

In the above scenario, the sequence of operations corresponds to a communication between the UE 102 and various network entities, including Access and Mobility Management Functions (AMFs) associated with different PLMNs and SNPNs.

At operation 201, the UE 102 is inserted with SIM1, and the Home PLMN (HPLMN) associated with the SIM1 is PLMN1 202. Subsequently, at operation 203, the UE 102 may initiate a registration procedure with the network using the SIM1, where the UE 102 communicates with an Access and Mobility Management Function (AMF) of PLMN1 202 to complete the registration process.

At operation 205, the AMF/PLMN1 202 may transmit a Downlink Non-Access Stratum (DL NAS) message to the UE 102, to share PLMN subscription information. Upon receiving the DL NAS message, the UE 102 may store the PLMN subscription information in its non-volatile memory, as shown in operation 207. The information may include a credential holder list that contains details about the SNPN-1, SNPN-2, and a Group ID for Network Selection (GIN) labeled as ID 1.

At operation 209 the SIM1 is removed, prompting the UE 102 to send a deregistration request to the AMF of PLMN1 202. Further at operation 211, the SIM1 is deregistered, effectively switching off the connection.

At operation 213, the UE 102 may be inserted with the SIM2, with the HPLMN of SIM2 being PLMN2. Due to mobility, at operation 215, the UE 102 moves out of the coverage area of PLMN1 202 and enters a region covered by PLMN3 204, SNPN1 206, and SNPN2 208.

A critical error occurs at operation 217, where the UE 102 wrongly assumes that SNPN1 206 can provide service for PLMN2 and selects SNPN1 206 for registration. Consequently, at operation 219, the UE 102 incorrectly uses the PLMN subscription credentials meant for SNPN1 206 with the SIM2.

At operation 221, the UE 102 sends a registration request to the AMF of SNPN1 206, which results in a registration reject message (#75) due to the erroneous credentials, as shown in operation 223. The UE 102 then selects SNPN2 in operation 225 and attempts to register with SNPN2 208 in operation 227, but this also results in a registration reject message (#75) in operation 229. At operation 227, the UE 102 again attempts to register with SNPN2, but the UE 102 fails to register and results in reject message (#75) in operation 229.

The above sequence of operations shows the incorrect registration attempts illustrating a significant challenge in managing multiple PLMN and SNPN subscriptions within the UE, leading to repeated registration failures.

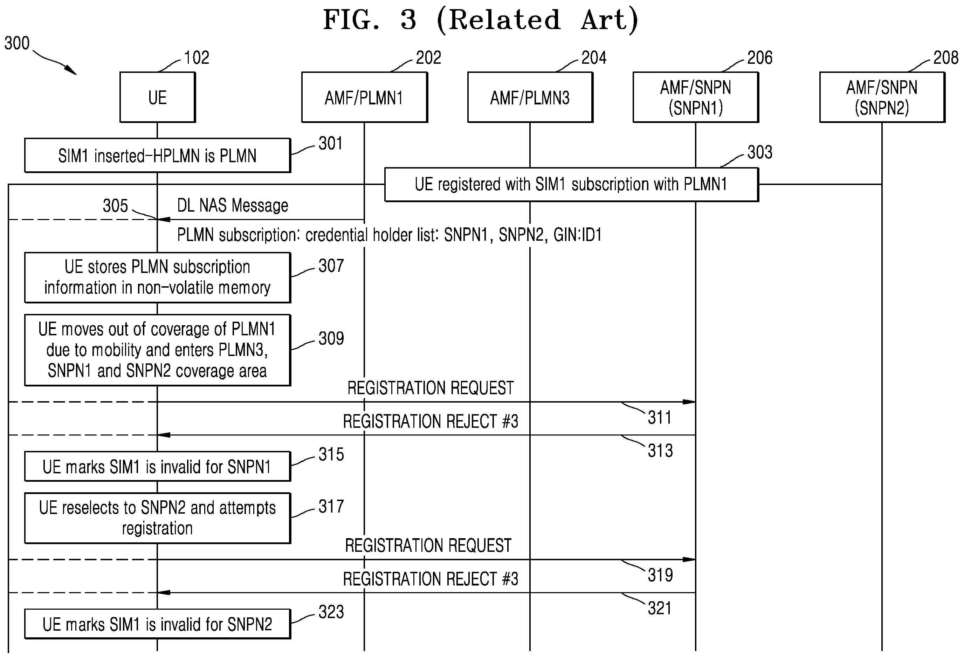

FIG. 3 illustrates a sequence of operations 300 depicting a challenge in a registration procedure for the UE 202 when dealing with different PLMNs and SNPNs, according to another conventional technique of the related art.

At operation 301, the UE 102 is inserted with SIM1 by the user, where the Home Public Land Mobile Network (HPLMN) is PLMN1 202. The insertion of the SIM1 triggers the initial network registration process. Subsequently, at operation 303, the UE 102 registers with the network using SIM1. During the registration, the UE 102 communicates with the AMF associated with PLMN1 202, successfully completing the registration process.

Following the registration, at operation 305, the AMF of PLMN1 202 sends a DL NAS message to the UE 102. The DL NAS message is to share PLMN subscription information. At operation 307, the UE 102 stores the PLMN subscription information in the non-volatile memory, ensuring that the data is retained even if the device is powered off. The stored information includes a credential holder list comprising SNPN1 206, SNPN2 208, and GIN labelled as ID 1.

Further, the UE 102 moves out of the coverage area of PLMN1 202 due to mobility, and enters PLMN3 204, SNPN1 206 and SNPN2 208 coverage area, as shown in operation 309. At operation 311, the UE 102 initiates a registration request with SNPN1 206, to establish a communication. At operation 313, the UE 102 receives a registration reject with a reject cause #3 from the SNPN1 206. Reject cause #3 may be sent to the UE either due to the UE failing an authentication check, or due to an identity of the UE not being acceptable to the network. At operation 315, the UE 102 marks SIM1 as invalid for SNPN1 206. At operation 317, the UE 102 reselects SNPN2 208 and attempts to register with the SNPN2 208.

At operation 319, the UE 102 initiates a registration request to the SNPN2 208 to establish a communication with the SNPN2 208. At operation 321, the UE 102 receives a registration rejection with a reject cause #3. At operation 323, the UE 102 marks SIM1 as invalid for SNPN2.

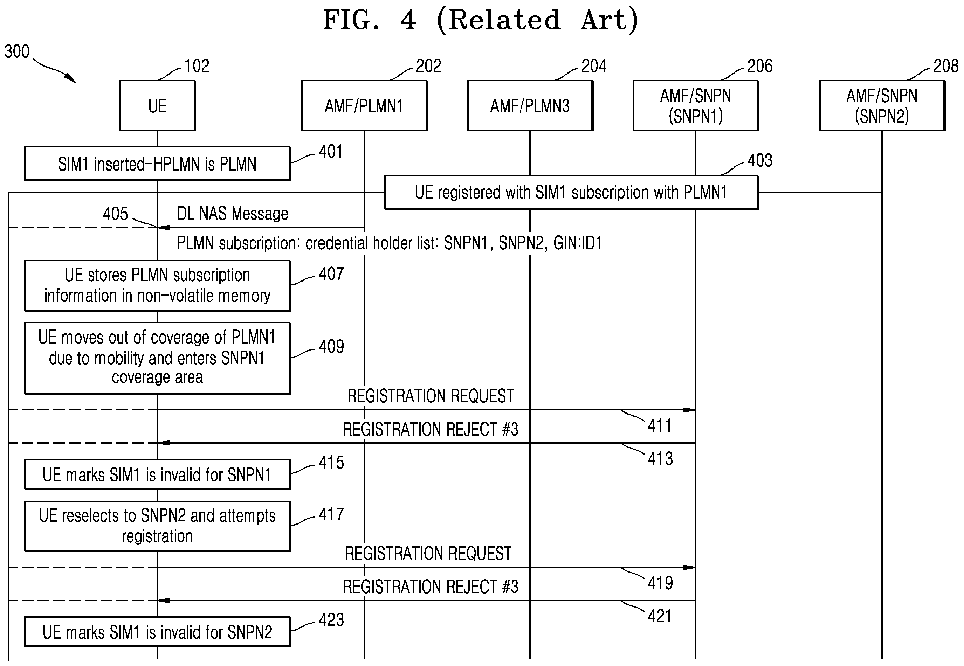

FIG. 4 illustrates a sequence of operations 400 depicting a challenge in a registration procedure for the UE 102 when dealing with different PLMNs and SNPNs, according to yet another conventional technique of the related art.

At operation 401, the UE 102 is inserted with SIM1 by the user, and the Home Public Land Mobile Network (HPLMN) is PLMN1 202. The insertion triggers the initial network registration process. Subsequently, at operation 403, the UE 102 registers with the network using SIM1. During the registration, the UE 102 communicates with the AMF associated with PLMN1 202, successfully completing the registration process.

Following the registration, at operation 405, the AMF of PLMN1 202 sends a DL NAS message to the UE 102. The DL NAS message is to share PLMN subscription information. At operation 407, the UE 102 stores the PLMN subscription information in the non-volatile memory, ensuring that the data is retained even if the device is powered off. The stored information includes a credential holder list comprising SNPN1 206, SNPN2 208, and a GIN labelled as ID 1.

Further, the UE 102 moves out of the coverage area of the PLMN1 due to mobility, and the UE 102 enters the coverage area of the SNPN1 206, as shown in operation 409. At operation 411, the UE 102 initiates a registration request with the SNPN1 206. However, at operation 413, the registration request is rejected by the SNPN1 206 with a 5GMM cause of #3.

Following the registration rejection, at operation 415, the UE 102 marks SIM1 as invalid for the SNPN1 206. At operation 417, the UE 102 reselects to the SNPN2 208 and attempts registration. However, as shown in operation 419, the UE 102 requests SNPN2 for registration, again the registration request is also rejected by the SNPN2 208 with the same 5GMM cause of #3 at operation 421.

At operation 423, the UE 202 marks SIM1 as invalid for the SNPN2 208 which indicates that the UE 102 is unable to register with either the SNPN1 206 or the SNPN2 208 due to invalid SIM1 credentials for these networks, as depicted in the series of rejections and status updates.

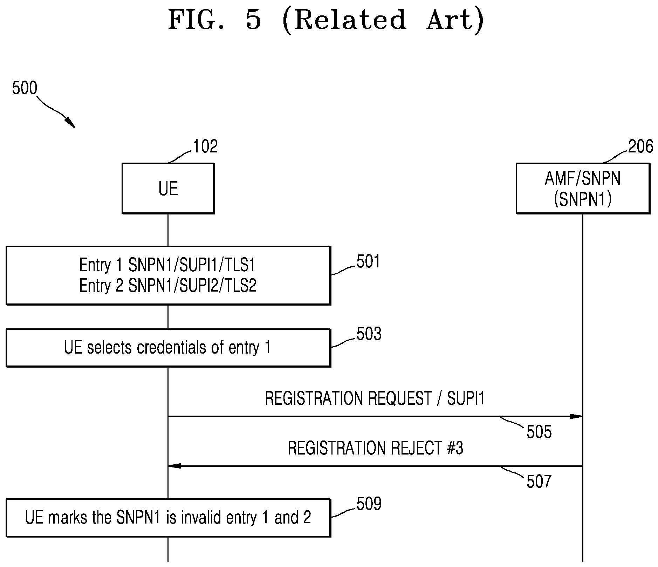

FIG. 5 illustrates a sequence of operations 500 depicting a challenge in a registration procedure for the UE 102 when dealing with different PLMNs and the SNPNs, according to yet another conventional technique of the related art.

At operation 501, the UE 102 is inserted with two sets of credentials for SNPN1: Entry 1 (SNPN1/SUPI1/TLS1) and Entry 2 (SNPN1/SUPI2/TLS2). The initial registration process is triggered. TLS1 and TLS2 may represent different transport layer security (TLS) types/protocols.

At operation 503, the UE 102 selects the credentials of Entry 1 for registration. Following the above operation, at operation 505, the UE 102 sends a registration request using SUPI1 to the SNPN1 206.

At operation 507, the registration request is rejected by the SNPN1 206 with a SGMM cause of #3. As a result of the rejection, at operation 509, the UE 102 marks the SNPN1 206 as invalid for both Entry 1 and Entry 2. The rejection indicates that the UE 102 is unable to register with the SNPN1 206 using the provided credentials of Entry 2.

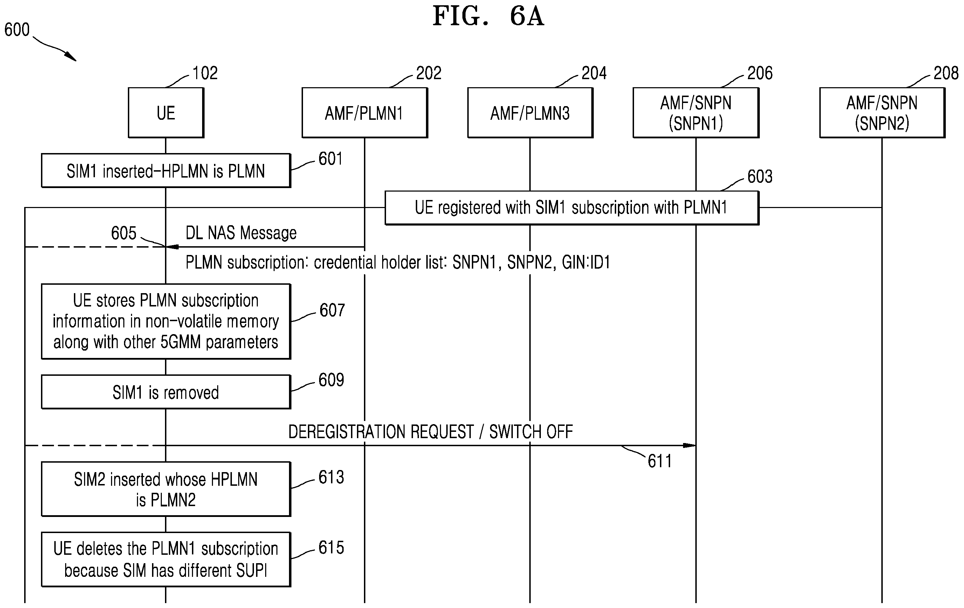

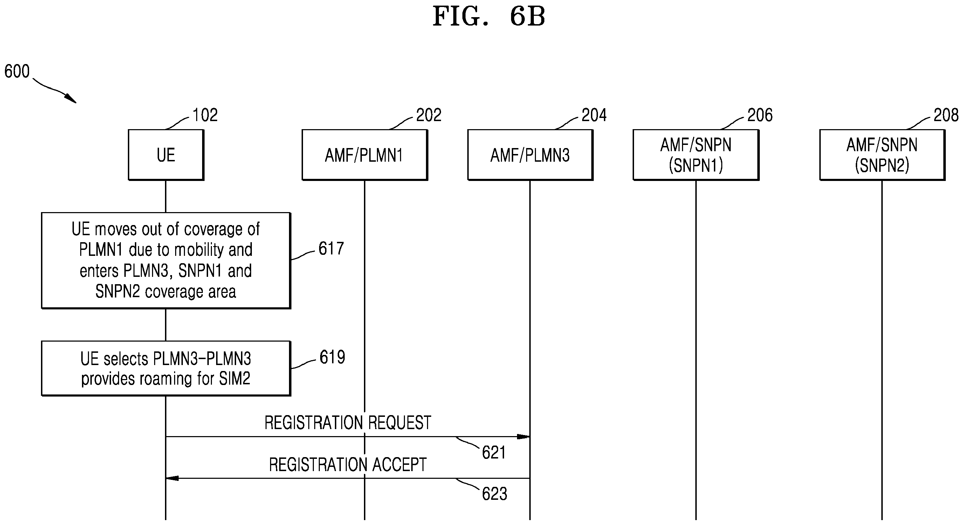

FIGS. 6A and 6B illustrate a sequence of operations 600 depicting a successful registration procedure for the UE 102 when dealing with different PLMNs and SNPNs, according to an embodiment of the disclosure.

At operation 601, the UE 102 is inserted with SIM1 by the user, and the Home Public Land Mobile Network (HPLMN) is PLMN1 202. The insertion of the SIM1 triggers the initial network registration process.

At operation 603, the UE 102 registers with the network using SIM1. During the registration, the UE 102 communicates with the AMF associated with the PLMN1 202, successfully completing the registration process.

At operation 605, the AMF of the PLMN1 202 sends a DL NAS message to the UE 102. The DL NAS message serves as a confirmation of the successful registration.

At operation 607, the UE 102 stores the PLMN subscription information along with other 5GMM parameters in the non-volatile memory, ensuring that the data is retained even if the device is powered off. The stored information includes a credential holder list comprising the SNPN1, the SNPN2, and the GIN labelled as ID1. The stored information may also include the SUPI of SIM1.

For example, UE 102 stores the SNPN selection parameters associated with the PLMN subscription (as described in 3GPP TS 23.122) along with other 5GMM parameters stored with the SUPI of the USIM in the non-volatile memory. For example, the PLMN subscription. The PLMN subscription information may include the SNPN selection parameters associated with the PLMN subscription.

At operation 609, the SIM1 is removed, prompting the UE 102 to send a deregistration request to the AMF of PLMN1 202.

At operation 611, the SIM1 is deregistered, effectively switching off the connection.

At operation 613, the UE 102 is inserted with SIM2, with the HPLMN of SIM2 being the PLMN2.

At operation 615, the UE 102 deletes the PLMN subscription based on detection of different SUPI of the SIM2. For example, UE 102 deletes the SNPN selection parameters - PLMN subscription parameter stored for SIM1

At operation 617, the UE 102 moves out of the coverage area of the PLMN1 202 and enters a region covered by the PLMN3 204, the SNPN1 206, and the SNPN2 208.

At operation 619, the UE 102 selects the PLMN3 204 which provides roaming services to the newly inserted SIM2.

At operation 621, the UE 102 initiates a registration request with PLMN3 204.

At operation 623, the UE 102 receives the acknowledgement from the PLMN3 204 accepting the registration and thus establishing a connection.

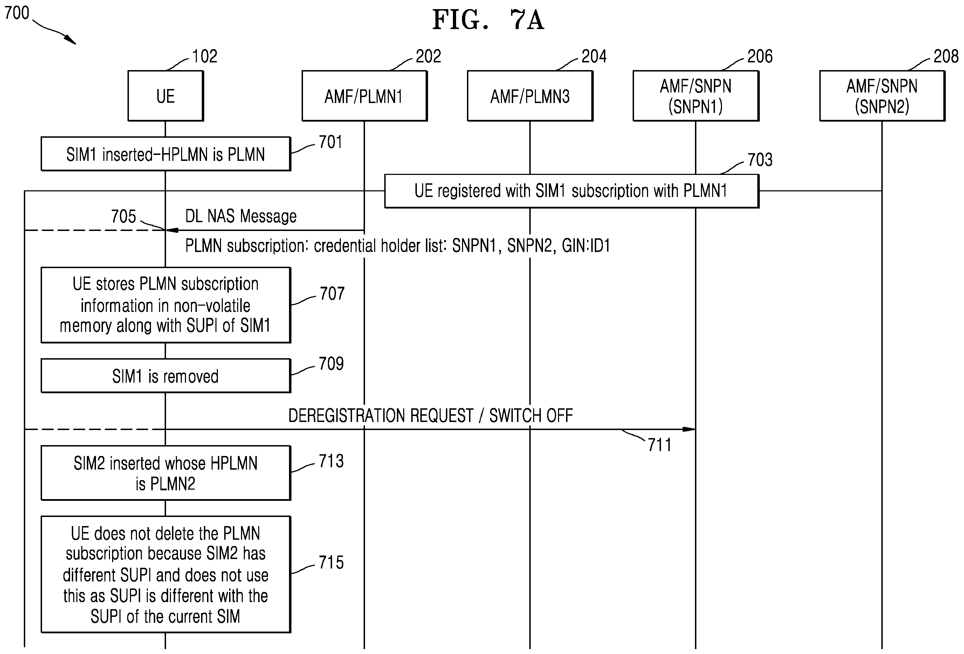

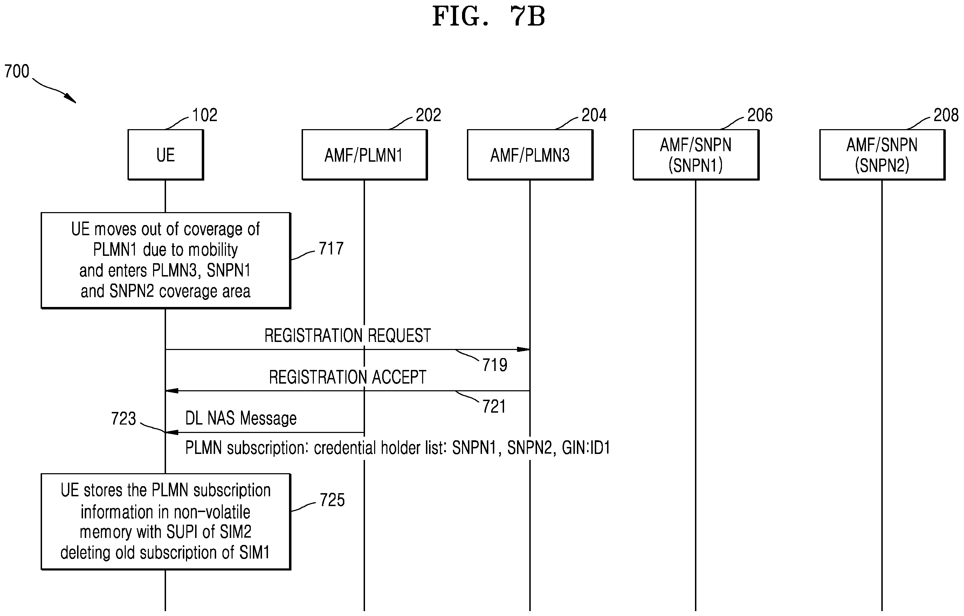

FIGS. 7A and 7B illustrate a sequence of operations 700 depicting a successful registration procedure for the UE 102 when dealing with the different PLMNs and SNPNs, according to another embodiment of the disclosure.

At operation 701, the UE 102 is inserted with SIM1 by the user, and the Home Public Land Mobile Network (HPLMN) is PLMN1 202. The insertion of SIM1 triggers the initial network registration process.

At operation 703, the UE 102 registers with the network using SIM1. During the registration, the UE 102 communicates with the AMF associated with the PLMN1 202, successfully completing the registration process.

At operation 705, the AMF of the PLMN1 202 sends a DL NAS message to the UE 102. The DL NAS message is to share PLMN subscription information.

At operation 707, the UE 102 stores the PLMN subscription information along with other 5GMM parameters in the non-volatile memory, ensuring that the data is retained even if the device is powered off. The stored information includes a credential holder list comprising the SNPN1 206, the SNPN2 208, and the GIN labelled as ID1.

At operation 709, the SIM1 is removed, prompting the UE 102 to send a deregistration request to the AMF of the PLMN1 202.

At operation 711, the SIM1 is deregistered, effectively switching off the connection.

At operation 713, the UE 102 is inserted with the SIM2, with the HPLMN of SIM2 being the PLMN2.

At operation 715, the UE 102 does not delete the PLMN subscription because the SIM2 has different SUPI and does not use the PLMN subscription associated with the SIM1. Further, the UE 102 may use the PLMN subscription details whenever SIM1 is inserted.

At operation 717, the UE 102 moves out of the coverage area of the PLMN1 202 and enters a region covered by the PLMN3 204, the SNPN1 206, and the SNPN2 208. At operation 719, the UE 102 initiates a registration request.

At operation 721, the UE 102 receives the acknowledgement from the PLMN3 204 accepting the registration and thus establishing a connection.

At operation 723, the AMF of PLMN1 202 sends a DL NAS message to the UE 102. The DL NAS message serves as a confirmation of the successful acceptance.

At operation 725, the UE 102 stores the PLMN subscription information along with other 5GMM parameters in the non-volatile memory with SUPI of SIM2 deleting old subscription of the SIM1. The stored information includes a credential holder list comprising the SNPN1 206, the SNPN2 208, and the GIN labelled as ID1.

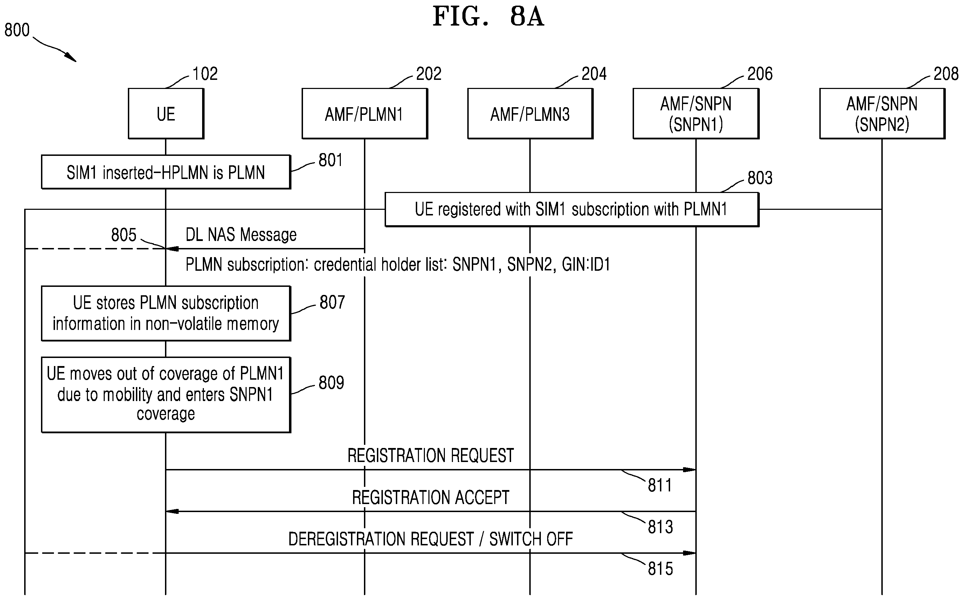

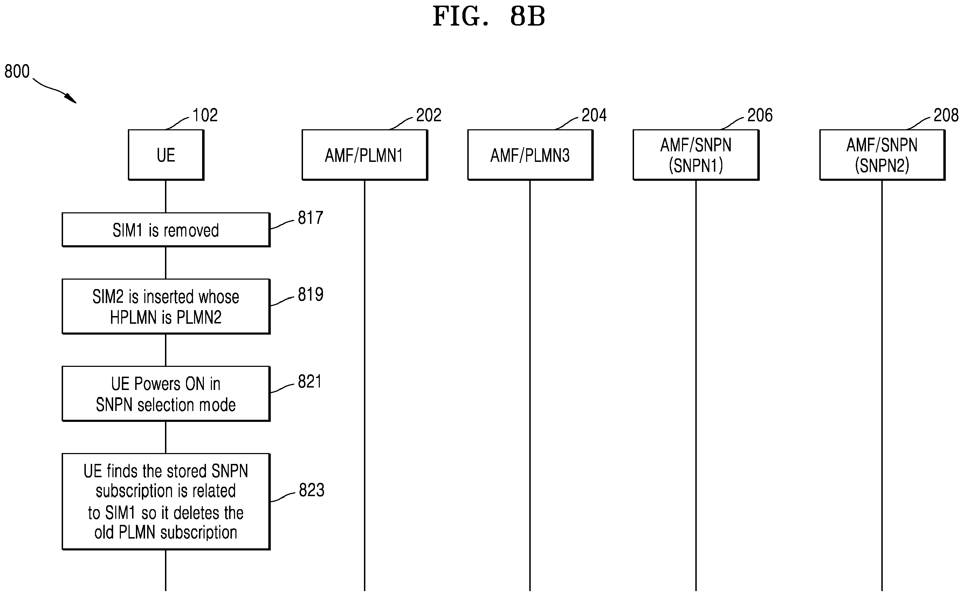

FIGS. 8A and 8B illustrate a sequence of operations 800 depicting a successful registration procedure for the UE 102 when dealing with different PLMNs and SNPNs, according to another embodiment of the disclosure.

At operation 801, the UE 102 is inserted with SIM1 by the user, and the Home Public Land Mobile Network (HPLMN) is the PLMN1 202. The insertion of the SIM1 triggers the initial network registration process.

At operation 803, the UE 102 registers with the network using the SIM1. During the registration, the UE 102 communicates with the AMF associated with PLMN1 202, successfully completing the registration process.

At operation 805, the AMF of PLMN1 202 sends a DL NAS message to the UE 102. The DL NAS message is to share PLMN subscription information.

At operation 807, the UE 102 stores the PLMN subscription information along with other 5GMM parameters in the non-volatile memory, ensuring that the data is retained even if the device is powered off. The stored information includes a credential holder list comprising the SNPN1 206, the SNPN2 208, and the GIN labelled as ID1.

At operation 809, the UE 102 is moved out of coverage area of the PLMN1 202 due to mobility and enters the SNPN1 206 coverage area. Upon moving out from the PLMN1 202 coverage area, and entering the coverage area of SNPN1 206, at operation 811, the UE 102 sends a registration request to the AMF of SNPN1 206, the SNPN1 206 accepts the registration request and sends the acknowledgement at operation 813.

At operation 815, the UE 102 sends a deregistration request to the AMF of PLMN1 202 where the SIM1 is deregistered, effectively switching off the connection.

At operation 817, SIM1 is removed, and at operation 819, the SIM2 is inserted where the HPLMN is PLMN2.

Upon the insertion of SIM2, at operation 821, the UE 102 is powered ON in SNPN selection mode. At operation 823, the UE 102 finds the stored SNPN subscription details related to SIM1, and thus, deletes the old PLMN subscription details stored in the UE 102.

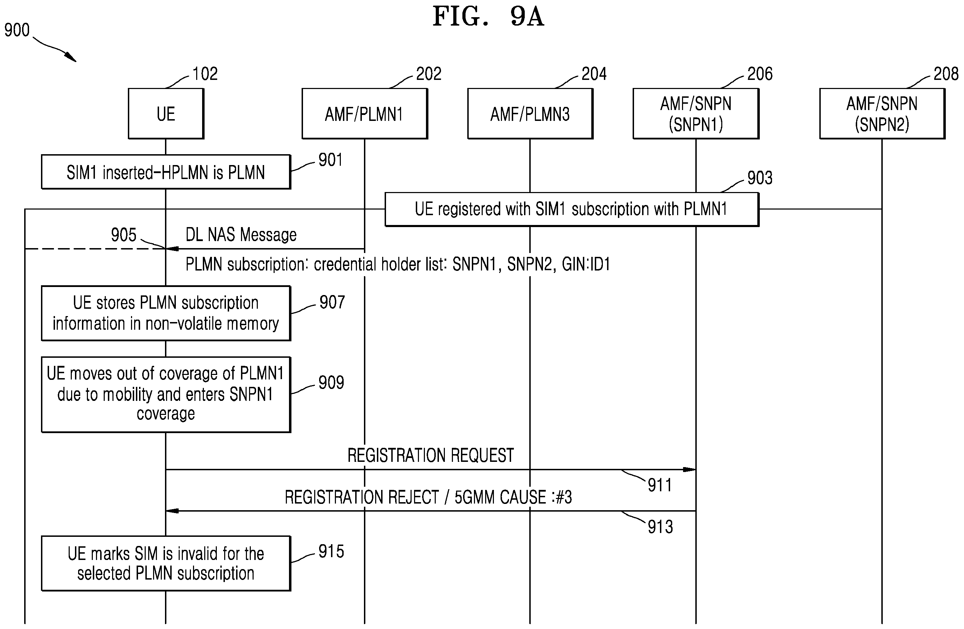

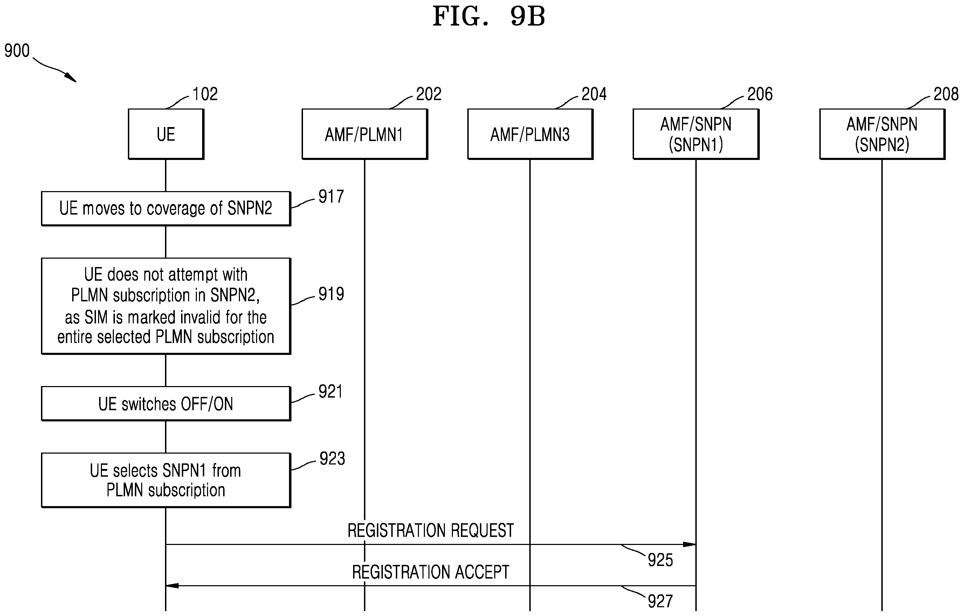

FIGS. 9A and 9B illustrate a sequence of operations 900 depicting a successful registration procedure for the UE 102 when dealing with different PLMNs and SNPNs, according to another embodiment of the disclosure.

At operation 901, the UE 102 is inserted with SIM1 by the user, and the Home Public Land Mobile Network (HPLMN) is PLMN1 202. The insertion of the SIM1 triggers the initial network registration process.

At operation 903, the UE 102 registers with the network using the SIM1. During the registration, the UE 102 communicates with the AMF associated with PLMN1 202, successfully completing the registration process.

At operation 905, the AMF of PLMN1 202 sends a DL NAS message to the UE 102. The DL NAS message is to share PLMN subscription information.

At operation 907, the UE 102 stores the PLMN subscription information along with other 5GMM parameters in the non-volatile memory, ensuring that the data is retained even if the device is powered off. The stored information includes a credential holder list comprising the SNPN1 206, the SNPN2 208, and the GIN labelled as ID1.

At operation 909, the UE 102 is moved out of coverage area of the PLMN1 202 due to mobility and enters the SNPN1 206 coverage area. Upon moving out from the PLMN1 202 coverage area, and entering the coverage area of the SNPN1 206, at operation 911, the UE 102 sends a registration request to the AMF of the SNPN1 206, the SNPN1 206 rejects the registration request and sends the acknowledgement with 5GMM cause #3 at operation 913.

At operation 915, the UE 102 marks SIM1 as invalid for the selected PLMN subscription.

At operation 917, the UE 102 moves to a coverage area of the SNPN2 208.

Upon moving to the coverage area of the SNPN2 208, at operation 919, the UE 102 does not attempt with the PLMN subscription in the SNPN2 208 since the UE 102 has marked SIM1 as invalid for the entire PLMN subscription.

At operation 921, the UE 102 is turned OFF, and turned ON.

At operation 923, the UE 102 selects the SNPN1 206 from the PLMN subscription.

At operation 925, the UE 102 sends registration request to the SNPN1 206.

At operation 927, the UE 102 receives the acceptance acknowledgment.

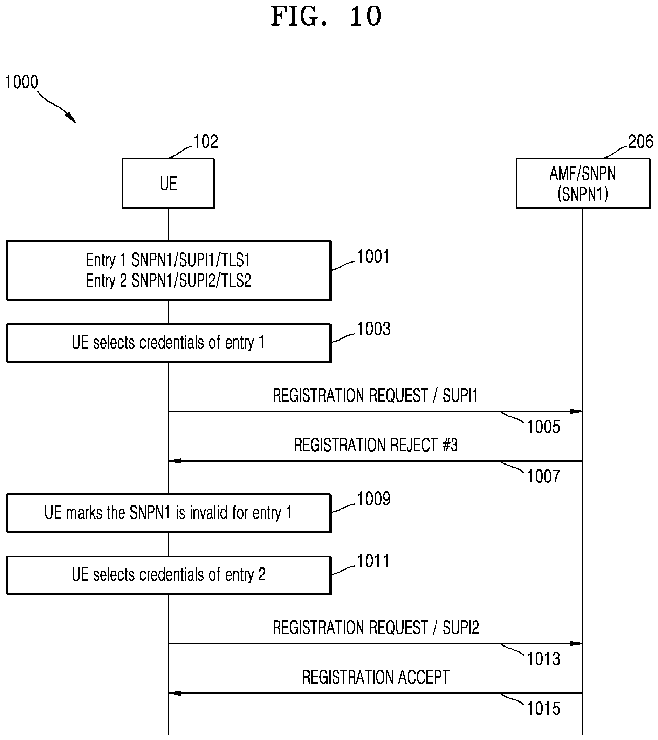

FIG. 10 illustrates a sequence of operations 1000 depicting a successful registration procedure for the UE 102 when dealing with different PLMNs and SNPNs, according to another embodiment of the disclosure.

At operation 1001, the UE 102 is inserted with two sets of credentials for SNPN1: Entry 1 (SNPN1/SUPI1/TLS1) and Entry 2 (SNPN1/SUPI2/TLS2). The initial registration process is triggered.

At operation 1003, the UE 102 selects the credentials of Entry 1 for registration.

At operation 1005, the UE 102 sends a registration request using SUPI1 to the SNPN1 206.

At operation 1007, the registration request is rejected by the SNPN1 206 with a 5GMM cause of #3. As a result of the rejection, at operation 1009, the UE marks SNPN1 as invalid only for Entry 1.

At operation 1011, the UE 102 selects the credentials of Entry 2 for registration.

At operation 1013, the UE 102 sends a registration request using the SUPI2 to the SNPN1 206.

At operation 1015, the registration request is accepted by the SNPN1 206, successfully completing the registration process using Entry 2.

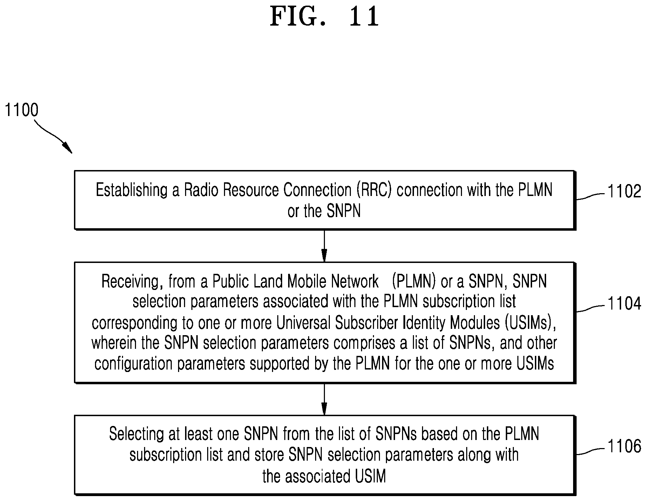

FIG. 11 illustrates a flow diagram of a method 1100 for optimizing selection of a SNPN by the UE 102, according to an embodiment of the disclosure.

At operation 1102, the method 1100 includes establishing a Radio Resource Control (RRC) connection with the PLMN or the SNPN.

At operation 1104, the method 1100 includes receiving, from the PLMN or the SNPN, the SNPN selection parameters associated with the PLMN subscription list corresponding to the one or more Universal Subscriber Identity Modules (USIMs), wherein the SNPN selection parameters comprise the list of SNPNs, and other configuration parameters (a plurality of configuration parameters) supported by the PLMN for the one or more USIMs.

At operation 1106, the method 1100 further includes selecting at least one SNPN from the list of SNPNs based on the PLMN subscription list and storing the PLMN subscription together with the SUPI from the USIM which is associated with the PLMN subscription. At operation 1106, the method 1100 further includes selecting at least one SNPN from the list of SNPNs based on the PLMN subscription list and storing the SNPN selection parameters along with the associated USIM.

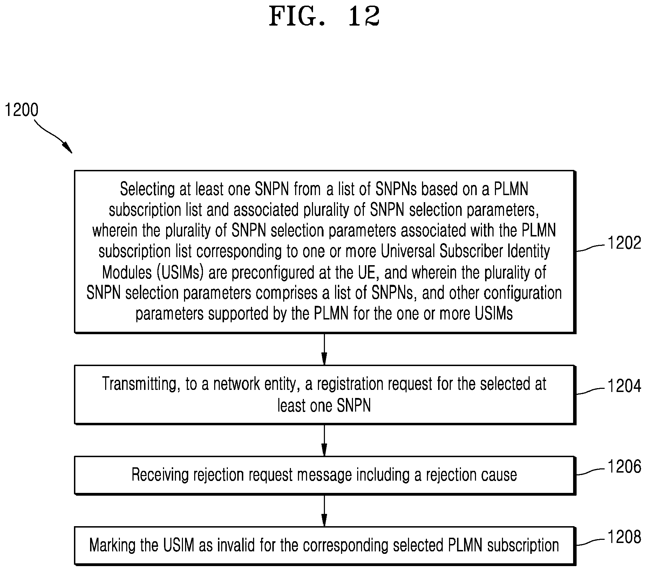

FIG. 12 illustrates a flow diagram of a method 1200 for optimizing selection of a SNPN by the UE 102, according to another embodiment of the disclosure.

At operation 1202, the method 1200 includes selecting at least one SNPN from the list of SNPNs based on the PLMN subscription list and associated plurality of SNPN selection parameters. The plurality of SNPN selection parameters associated with the PLMN subscription list corresponding to one or more USIMs are preconfigured at the UE 102, and the plurality of SNPN selection parameters comprises the list of SNPNs, and other configuration parameters supported by the PLMN for the one or more USIMs.

At operation 1204, the method 1200 includes transmitting, to a network entity, a registration request for the selected at least one SNPN

At operation 1206, the method includes receiving a rejection request message including a rejection cause.

At operation 1208, the method 1200 includes marking the USIM as invalid for the corresponding selected PLMN subscription.

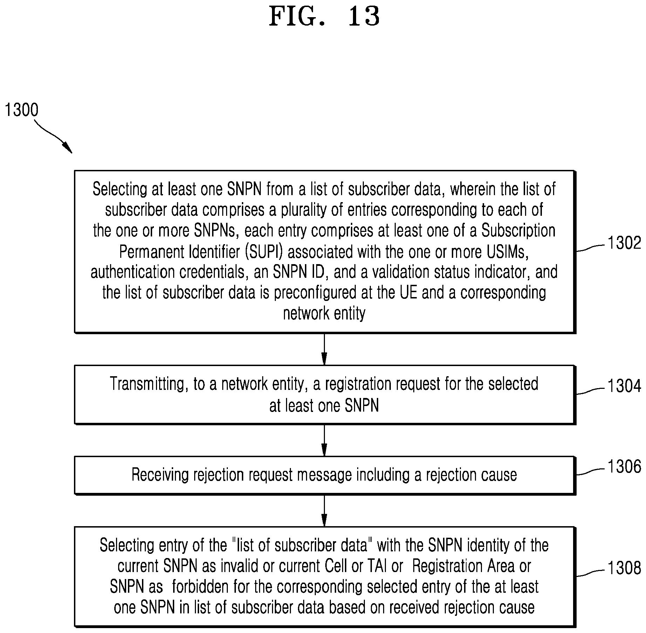

FIG. 13 illustrates a flow diagram of a method 1300 for optimizing selection of a SNPN by the UE 102, according to another embodiment of the disclosure.

At operation 1302, the method 1300 includes selecting at least one SNPN from the list of subscriber data, wherein the list of subscriber data comprises a plurality of entries corresponding to each of the one or more SNPNs, each entry comprises at least one of a SUPI associated with the one or more USIMs, authentication credentials, the SNPN ID, and a validation status indicator, and the list of subscriber data is preconfigured at the UE 102 and a corresponding network entity.

At operation 1304, the method 1300 includes transmitting, to a network entity, a registration request for the selected at least one SNPN

At operation 1306, the method 1300 includes receiving a rejection request message including a rejection cause.

At operation 1308, the method 1300 includes marking the selected entry of the "list of subscriber data" with the SNPN identity of the current SNPN as invalid, or current Cell or Tracking Area Identity (TAI) or Registration Area or SNPN as forbidden for the corresponding selected entry of the at least one SNPN in list of subscriber data based on received rejection cause.

At operation 1308, the method 1300 further includes marking the selected entry of the "list of subscriber data" with the SNPN identity of the current SNPN as invalid until the UE 102 is switched off, the entry is updated or the timer T3245 expires, if registration reject message is received with 5GMM cause: #3 or #6 or #7. Reject cause #6 may be sent if the mobile equipment (ME) is not acceptable to the network. Reject cause #7 may be sent if the UE is not allowed to operate 5G System (5GS) services.

In some embodiments, at operation 1308, the method further 1300 includes marking and storing the current TAI in the list of "5GS forbidden tracking areas for regional provision of service" for the current SNPN and the selected entry of the "list of subscriber data" or the selected PLMN subscription, if registration reject message is received with 5GMM cause: #12. Reject cause #12 may be sent if UE requests service, or if the network initiates a de-registration procedure, in a forbidden tracking area (e.g. a tracking area in which the UE, by subscription, is not allowed to operate). The UE 102 shall not select the TAI list further until the TAI is removed from the list of "5GS forbidden tracking areas for regional provision of service".

In some other embodiments, at operation 1308, the method 1300 further includes marking and storing the current TAI in the list of "5GS forbidden tracking areas for roaming" for the current SNPN and the selected entry of the "list of subscriber data" or the selected PLMN subscription, if registration reject message is received with 5GMM cause: #13 or #15. Reject cause #13 may be sent if UE requests service, or if the network initiates a de-registration procedure, in a tracking area of a PLMN by which subscription offers roaming to that UE but not in that tracking area. Reject cause #15 may be set if the requests service, or if the network initiates a de-registration procedure, in a forbidden tracking area (e.g. a tracking area in which the UE is not allowed to operate), and where the UE should find another allowed tracking area in the same PLMN or an equivalent PLMN or the same SNPN or an equivalent SNPN. The UE 102 shall not select the TAI list further until the TAI is removed from the list of "5GS forbidden tracking areas for roaming".

In some other embodiments, at operation 1308, the method 1300 includes marking and storing the SNPN identity in the "temporarily forbidden SNPNs" list maintained for the selected entry, if registration reject message is received with 5GMM cause: #74. Reject cause #74 may be sent if the UE requests access, or if the network initiates a de-registration procedure, in a cell belonging to an SNPN for which the UE has no subscription to operate or for which the UE is not allowed to operate onboarding services. The UE 102 shall not select the SNPN for the selected entry until the SNPN is removed from the list of "temporarily forbidden SNPNs."

In some other embodiments, at operation 1308, the method 1300 includes marking and storing the SNPN identity in the "permanently forbidden SNPNs" list maintained for the selected entry, if registration reject message is received with 5GMM cause: #75. Reject cause #75 may be sent if the UE requests access, or if the network initiates a de-registration procedure, in a cell belonging to an SNPN with a globally-unique SNPN identity for which the UE either has no subscription to operate, the UE's subscription has expired or the UE is not allowed to operate onboarding services. The UE 102 shall not select the SNPN for the selected entry until the SNPN is removed from the list of "permanently forbidden SNPNs".

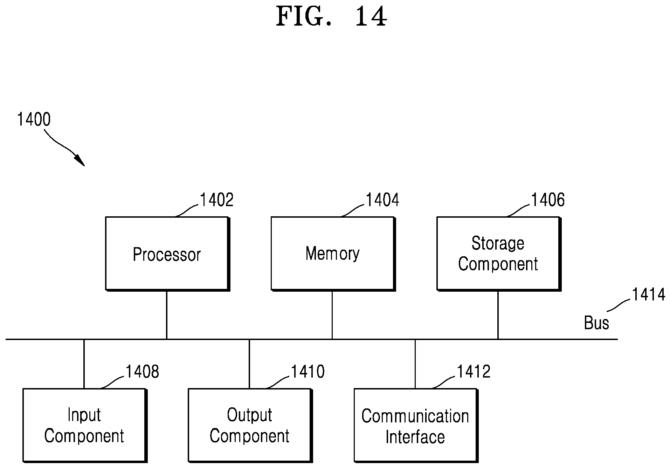

FIG. 14 illustrates an embodiment of a system 1400, according to an embodiment of the disclosure. As shown in FIG. 14, the system 1400 includes a processor 1402, a memory 1404, a storage component 1406, an input component 1408, an output component 1410, a communication interface 1412, and a bus 1414.

The processor 1402, as used herein, means any type of computational circuit that may comprise hardware elements and software elements. The processor 1402 may be embodied as a multi-core processor, a single core processor, or a combination of one or more multi-core processors and/or one or more single core processors, a distributed processing system, or the like. The processor 1402 may be a Central Processing Unit (CPU) a graphics processing unit (GPU), an accelerated processing unit (APU), an application-specific integrated circuit (ASIC), or another type of processing component.

The memory 1404 includes a non-transitory computer readable medium. The memory 1404 includes a random-access memory (RAM), a read only memory (ROM), and/or another type of dynamic or static storage device (e.g., a flash memory, a magnetic memory, and/or an optical memory) that stores information and/or instructions for use by processor 1402. The memory 1404 comprises machine-readable instructions which are executable by the processor 1402. These machine-readable instructions when executed by the processor 1402 cause the processor 1402 to perform one or more method steps of an embodiment described above.

The storage component 1406 stores information or software related to the operation and use of the system 1400. For example, the storage component 1406 may include a hard disk (e.g., a magnetic disk, an optical disk, a magneto-optic disk, and/or a solid-state disk), a compact disc (CD), a digital versatile disc (DVD), a floppy disk, a cartridge, a magnetic tape, and/or another type of non-transitory computer-readable medium, along with a corresponding drive.

The input component 1408 may be configured to receive information, such as user input. For example, the input component 1408 may include, but not be limited to, a touch screen display, a keyboard, a keypad, a mouse, a button, a switch, and/or a microphone. The output component 1410 is configured to convey information from the system 1440 to the user or other systems, utilizing a variety of devices and technologies tailored to specific application needs. The output component 1410 may include visual output devices such as display screens (LCD, LED, OLED), projectors, and heads-up displays (HUDs) for presenting graphical or textual information. Additionally, auditory output through speakers and headphones provides audio feedback and alerts, while haptic output devices, like vibration motors in smartphones or game controllers, offer tactile feedback. Functionally, the output component serves multiple roles, including displaying graphical user interface (GUI) elements for user interaction, delivering notifications and alerts through sound, visual indicators, or vibrations, and rendering complex data visualizations like charts and graphs for easier comprehension.

In an embodiment, the output component 1410 may be configured to receive processed data from the processor 1402, which determines the information to be communicated, and the output component 1410 may access memory 1404 and storage component 1406 to retrieve and display stored information such as documents, media files, or application states. Furthermore, the output component 1410 may be configured to meet the specific requirements of different applications, such as high-resolution visual output and immersive audio for gaming systems or clear and precise data visualization and alert mechanisms for industrial control systems. Through these varied output methods, the output component 1410 ensures effective communication of information, enhancing both system functionality and user experience.

The disclosure provides significant advantages and a robust method for optimizing the selection of SNPNs by the UE 102. By incorporating SNPN selection parameters associated with the PLMN subscription list corresponding to multiple USIMs, the method ensures an efficient network selection process. The inclusion of a preconfigured list of SNPNs and other relevant configuration parameters supported by the PLMN enhances the UE's ability to seamlessly select the most appropriate SNPN based on the stored data. The capability is further refined by allowing the method to update the PLMN subscription list dynamically based on connection status of the UE 102, ensuring real-time adaptability and improved network performance. Further, the disclosure provides the inclusion of a user and credentials holder-controlled prioritized lists allows for customized and preference-based SNPN selection, catering to varied user needs and service requirements. Furthermore, the disclosure also addresses the robustness of network selection by storing SNPN selection parameters in the non-volatile memory, thereby preserving critical data across power cycles. The disclosure also incorporates mechanisms to handle registration rejections effectively by invalidating associated USIMs and corresponding SNPN entries based on predefined rejection causes which not only ensures the integrity of the PLMN subscription list but also enhances the security and reliability of the network selection process.

Various causes for rejection of an access request are discussed herein. These causes are outlined in 3GPP TS 24.501.

The modules, processes, systems, and devices described above can be implemented in hardware, hardware programmed by software, software instruction stored on a non-transitory computer readable medium or a combination of the above. Embodiments of the methods, processes, modules, devices, and systems (or their sub-components or modules), may be implemented on a general-purpose computer, a special-purpose computer, a programmed microprocessor or microcontroller and peripheral integrated circuit element, an ASIC or other integrated circuit, a digital signal processor, a hardwired electronic or logic circuit such as a discrete element circuit, a programmed logic circuit such as a programmable logic device (PLD), programmable logic array (PLA), field-programmable gate array (FPGA), programmable array logic (PAL) device, or the like. In general, any process capable of implementing the functions or steps described herein may be used to implement embodiments of the methods, systems, or computer program products (software program stored on a non-transitory computer readable medium).

Furthermore, embodiments of the disclosed methods, processes, modules, devices, systems, and computer program product may be readily implemented, fully or partially, in software using, for example, object or object-oriented software development environments that provide portable source code that may be used on a variety of computer platforms. Alternatively, embodiments of the disclosed methods, processes, modules, devices, systems, and computer program product may be implemented partially or fully in hardware using, for example, standard logic circuits or a very-large-scale integration (VLSI) design. Other hardware or software may be used to implement embodiments depending on the speed and/or efficiency requirements of the systems, the particular function, and/or the particular software or hardware system, microprocessor, or microcomputer being utilized.

In this application, unless specifically stated otherwise, the use of the singular includes the plural and the use of "or" means "and/or." Furthermore, use of the terms "including" or "having" is not limiting. Any range described herein will be understood to include the endpoints and all values between the endpoints. Features of the disclosed embodiments may be combined, rearranged, omitted, etc., within the scope of the disclosure to produce additional embodiments. Furthermore, certain features may sometimes be used to advantage without a corresponding use of other features.

Embodiments are set out in the following Clauses:
Clause 1. A method for optimizing selection of a Standalone Non-Public Network (SNPN) by a User Equipment (UE), the method comprising:
   receiving, from a Public Land Mobile Network (PLMN) or a SNPN, SNPN selection parameters associated with a PLMN subscription list corresponding to one or more Universal Subscriber Identity Modules (USIMs), wherein the SNPN selection parameters comprises a list of SNPNs, and a plurality of configuration parameters supported by the PLMN for the one or more USIMs; and
   selecting at least one SNPN from the list of SNPNs based on the PLMN subscription list and storing SNPN selection parameters along with a USIM being associated with the SNPN selection parameters.
Clause 2. The method of Clause 1, further comprises selecting at least one of a SNPN and a PLMN based on a Subscription Permanent Identifier (SUPI) associated with the one or more USIMs.
Clause 3. The method of Clause 1 or Clause 2, wherein the SNPN selection parameters and the USIM being associated with the SNPN selection parameters are stored in a non-volatile memory of the UE.
Clause 4. The method of any preceding Clause, further comprising:
   transmitting, to a network entity, a registration request for the selected at least one SNPN;
   receiving a rejection request message including a rejection cause; and
   invalidating the USIM being associated with the SNPN selection parameters and a corresponding entry of the selected at least one SNPN in the PLMN subscriber list based on the received rejection cause.
Clause 5. The method of Clause 4, wherein the rejection cause comprises at least one of a reject cause #3, a reject cause #6, and a reject cause #7.
Clause 6. A method for optimizing selection of a Standalone Non-Public Network (SNPN) by a User Equipment (UE), the method comprising selecting at least one SNPN from a list of SNPNs, based on a PLMN subscription list and associated plurality of SNPN selection parameters,
   wherein the plurality of SNPN selection parameters associated with the PLMN subscription list corresponding to one or more Universal Subscriber Identity Modules (USIMs) are preconfigured at the UE, and
   wherein the plurality of SNPN selection parameters comprises the list of SNPNs and a plurality of configuration parameters supported by the PLMN for the one or more USIMs.
Clause 7. A method for optimizing selection of a Standalone Non-Public Network (SNPN) by a User Equipment (UE), the method comprising selecting at least one SNPN from a list of subscriber data,
   wherein the list of subscriber data comprises a plurality of entries corresponding to each of one or more SNPNs,
   wherein each entry comprises at least one of a Subscription Permanent Identifier (SUPI), authentication credentials, an SNPN ID, and a validation status indicator, and
   wherein the list of subscriber data is preconfigured at the UE and a corresponding network entity.
Clause 8. The method of Clause 7, comprising:
   transmitting, to a network entity, a registration request for the selected at least one SNPN;
   receiving rejection request message including a rejection cause; and
   marking a current Tracking Area Identity (TAI) or SNPN forbidden for the corresponding selected entry of the at least one SNPN in the list of subscriber data based on the received rejection cause.
Clause 9. The method of Clause 8, wherein the rejection cause comprises at least one of a reject cause #12, a reject cause #13, a reject cause #15, a reject cause #74, and a reject cause #75.
Clause 10. A system for optimizing selection of a Standalone Non-Public Network (SNPN) by a User Equipment (UE), the system comprising:
   at least one memory;
   at least one processor operatively connected to the at least one memory and configured to:
      receive, from a Public Land Mobile Network (PLMN) or a SNPN, SNPN selection parameters associated with the PLMN subscription list corresponding to one or more Universal Subscriber Identity Modules (USIMs), wherein the SNPN selection parameters comprises a list of SNPNs and a plurality of configuration parameters supported by the PLMN for the one or more USIMs; and
      select at least one SNPN from the list of SNPNs based on the PLMN subscription list and storing SNPN selection parameters along with a USIM being associated with the SNPN selection parameters.
Clause 11. The system of Clause 10, the at least one processor is further configured to select at least one of a SNPN and a PLMN based on a Subscription Permanent Identifier (SUPI) associated with the one or more USIMs.
Clause 12. The system of Clause 10 or Clause 11, wherein the SNPN selection parameters and the USIM being associated with the SNPN selection parameters are stored in a non-volatile memory of the UE.
Clause 13. The system of any of Clauses 10-12, the at least one processor is further configured to:
   transmit, to a network entity, a registration request for the selected at least one SNPN;
   receive rejection request message including a rejection cause; and
   invalidate the USIM being associated with the SNPN selection parameters and a corresponding entry of the selected at least one SNPN in the PLMN subscriber list based on the received rejection cause.
Clause 14. The system of Clause 13, wherein the rejection cause comprises at least one of a reject cause #3, a reject cause #6, and a reject cause #7.
Clause 15. A system for optimizing selection of a Standalone Non-Public Network (SNPN) by a User Equipment (UE), the system comprising:
   at least one memory;
   at least one processor operatively connected to the at least one memory and configured to select at least one SNPN from a list of SNPNs based on a PLMN subscription list and associated plurality of SNPN selection parameters,
   wherein the plurality of SNPN selection parameters associated with the PLMN subscription list corresponding to one or more Universal Subscriber Identity Modules (USIMs) are preconfigured at the UE, and
   wherein the plurality of SNPN selection parameters comprises the list of SNPNs and a plurality of configuration parameters supported by the PLMN for the one or more USIMs.

The drawings and the forgoing description give examples of embodiments. Those skilled in the art will appreciate that one or more of the described elements may well be combined into a single functional element. Alternatively, certain elements may be split into multiple functional elements. Elements from one embodiment may be added to another embodiment. For example, orders of processes described herein may be changed and are not limited to the manner described herein.

## Claims

1. A method for optimizing selection of a Standalone Non-Public Network, SNPN, by a User Equipment, UE, the method comprising:
receiving, from a Public Land Mobile Network, PLMN, or a SNPN, SNPN selection parameters associated with a PLMN subscription list corresponding to one or more Universal Subscriber Identity Modules, USIMs, wherein the SNPN selection parameters comprise a list of SNPNs, and a plurality of configuration parameters supported by the PLMN for the one or more USIMs; and
selecting at least one SNPN from the list of SNPNs based on the PLMN subscription list and storing SNPN selection parameters along with an indication of a USIM associated with the SNPN selection parameters.

2. The method of claim 1, further comprises selecting at least one of a SNPN and a PLMN based on a Subscription Permanent Identifier, SUPI, associated with the one or more USIMs.

3. The method of claim 1 or claim 2, wherein the SNPN selection parameters and the indication of the USIM associated with the SNPN selection parameters are stored in a non-volatile memory of the UE.

4. The method of any preceding claim, further comprising:
transmitting, to a network entity, a registration request for the selected at least one SNPN;
receiving a rejection request message including a rejection cause; and
invalidating the USIM associated with the SNPN selection parameters and a corresponding entry of the selected at least one SNPN in the PLMN subscriber list based on the received rejection cause.

5. The method of claim 4, wherein the rejection cause comprises at least one of a reject cause #3, a reject cause #6, and a reject cause #7.

6. A method for optimizing selection of a Standalone Non-Public Network, SNPN, by a User Equipment, UE, the method comprising selecting at least one SNPN from a list of SNPNs, based on a PLMN subscription list and associated plurality of SNPN selection parameters,
wherein the plurality of SNPN selection parameters associated with the PLMN subscription list correspond to one or more Universal Subscriber Identity Modules, USIMs, and are preconfigured at the UE, and
wherein the plurality of SNPN selection parameters comprises the list of SNPNs and a plurality of configuration parameters supported by the PLMN for the one or more USIMs.

7. A method for optimizing selection of a Standalone Non-Public Network, SNPN, by a User Equipment, UE, the method comprising selecting at least one SNPN from a list of subscriber data,
wherein the list of subscriber data comprises a plurality of entries corresponding to each of one or more SNPNs,
wherein each entry comprises at least one of a Subscription Permanent Identifier, SUPI, authentication credentials, an SNPN ID, and a validation status indicator, and
wherein the list of subscriber data is preconfigured at the UE and a corresponding network entity.

8. The method of claim 7, comprising:
transmitting, to a network entity, a registration request for the selected at least one SNPN;
receiving rejection request message including a rejection cause; and
marking a current Tracking Area Identity, TAI, or SNPN forbidden for the corresponding selected entry of the at least one SNPN in the list of subscriber data based on the received rejection cause.

9. The method of claim 8, wherein the rejection cause comprises at least one of a reject cause #12, a reject cause #13, a reject cause #15, a reject cause #74, and a reject cause #75.

10. A system for optimizing selection of a Standalone Non-Public Network, SNPN, by a User Equipment, UE, the system comprising:
at least one memory;
at least one processor operatively connected to the at least one memory and configured to:
receive, from a Public Land Mobile Network, PLMN, or a SNPN, SNPN selection parameters associated with the PLMN subscription list corresponding to one or more Universal Subscriber Identity Modules, USIMs, wherein the SNPN selection parameters comprises a list of SNPNs and a plurality of configuration parameters supported by the PLMN for the one or more USIMs; and
select at least one SNPN from the list of SNPNs based on the PLMN subscription list and storing SNPN selection parameters along with an indication of a USIM associated with the SNPN selection parameters.

11. The system of claim 10, wherein the at least one processor is further configured to select at least one of a SNPN and a PLMN based on a Subscription Permanent Identifier, SUPI, associated with the one or more USIMs.

12. The system of claim 10 or claim 11, wherein the SNPN selection parameters and the USIM associated with the SNPN selection parameters are stored in a non-volatile memory of the UE.

13. The system of any of claims 10-12, the at least one processor is further configured to:
transmit, to a network entity, a registration request for the selected at least one SNPN;
receive a rejection request message including a rejection cause; and
invalidate the USIM associated with the SNPN selection parameters and a corresponding entry of the selected at least one SNPN in the PLMN subscriber list based on the received rejection cause.

14. The system of claim 13, wherein the rejection cause comprises at least one of a reject cause #3, a reject cause #6, and a reject cause #7.

15. A system for optimizing selection of a Standalone Non-Public Network, SNPN, by a User Equipment, UE, the system comprising:
at least one memory;
at least one processor operatively connected to the at least one memory and configured to select at least one SNPN from a list of SNPNs based on a PLMN subscription list and associated plurality of SNPN selection parameters,
wherein the plurality of SNPN selection parameters associated with the PLMN subscription list correspond to one or more Universal Subscriber Identity Modules, USIMs, and are preconfigured at the UE, and
wherein the plurality of SNPN selection parameters comprises the list of SNPNs and a plurality of configuration parameters supported by the PLMN for the one or more USIMs.
